# EUROPEAN PATENT APPLICATION

(11) **EP 4 633 077 A1**
(43) Date of publication of application: **15.10.2025**
(21) Application number: 25158895.0
(22) Date of filing: 19.02.2025
(51) Int. Cl.: H04L 5/00, H04L 1/08, H04L 1/00

(54) **SYSTEMS AND METHODS FOR ULTRA HIGH RELIABILITY (UHR) ENHANCED LONG RANGE (ELR) PAYLOAD CONFIGURATIONS**

(30) Priority: 27.02.2024 US 202463558407 P; 31.07.2024 US 202418790328
(71) Applicant: Avago Technologies International Sales Pte. Limited, Singapore 768923 (SG)
(72) Inventor: Porat, Ron, Irvine, 92618 (US); Nassiri Toussi, Karim, Irvine, 92618 (US)
(74) Representative: Dilg, Haeusler, Schindelmann Patentanwaltsgesellschaft mbH

(57) **Abstract**

A system (2000) for wireless communications over one or more channels, may include one or more processors (2010) and memory (2060) coupled with the one or more processors (2010). The one or more processors (2010) may identify, based at least on a target data rate and a frequency bandwidth of a channel among the one or more channels, (1) a number of resource units, Rus, within the frequency bandwidth and (2) a number of tones per RU to achieve the target data rate. The one or more processors (2010) may transmit, via a transmitter (120), data using one or more RUs.

## Description

### Cross-Reference to Related Applications

This application claims the benefit of and priority to U.S. Provisional Patent Application No. 63/558,407 filed on February 27, 2024, which is incorporated herein by reference in its entirety for all purposes.

### Field of the Disclosure

This disclosure generally relates to systems and methods for defining or configuring a payload structure in wireless networks (e.g., a wireless local area network (WLAN)) to improve the efficiency of the design/definition/configuration of the payload structure and/or the efficiency of data transmission.

### Background of the Disclosure

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

Ultra High Reliability (UHR) is a new study group within the IEEE 802.11 working group that focuses on enhancing the reliability of Wireless Local Area Network (WLAN or Wi-Fi) connectivity. Enhanced Long Range (ELR) in the context of the IEEE 802.11 refers to communication schemes designed to extend the range and reliability of WLANs. Orthogonal frequency division multiplexing (OFDM) payload structure or packet format can be defined/designed/configured for a 20MHz channel at a rate of 1Mbps. For example, UHR has agreed to define/design/configure a packet format to carry 1Mbps over a 20MHz channel. 1Mbps is defined for the IEEE 802.11b standard but is a very old and inefficient design/configuration. A 20 MHz orthogonal frequency division multiple access (OFDMA) channel may include a total of 256 subcarriers (tones). These tones can be grouped into smaller sub-channels called Resource Units (RUs). A code rate (or coding rate) represents the ratio of useful information (data) bits to the total transmitted bits. A code rate can have a great impact on the efficiency of data transmission using OFDM.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a diagram depicting an example communication environment with communication systems, according to one or more implementations.
FIG. 2 is a schematic block diagram of a computing system, according to an implementation.
FIG. 3 is a diagram depicting a structure of an ELR packet, according to one or more implementations.
FIG. 4 is a diagram depicting an allocation structure of resource units (RUs) in a bandwidth of 20 MHz, according to one or more implementations.
FIG. 5 is a diagram depicting an example of repeating symbols to achieve a target data rate, according to one or more implementations.
FIG. 6 is a diagram depicting an example structure of distributed resource units (dRUs) in a bandwidth of 20 MHz to achieve up to a target data rate, according to one or more implementations.
FIG. 7A and FIG. 7B are diagrams depicting an example of configuring a code rate, a modulation scheme and a RU structure to achieve a target data rate, according to one or more embodiments.
FIG. 8A, FIG. 8B and FIG. 8C are diagrams depicting an example structure of RUs in a bandwidth of 20 MHz to achieve a target data rate, according to one or more embodiments.
FIG. 9 is a flow diagram showing a process for configuring a payload structure to achieve a target data rate, according to one or more implementations.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of systems and methods for UHR enhanced ELR payload configurations.

### A. Computing and Network Environment

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to one or more apparatuses, devices and/or systems, including a transmitter and/or receiver and one or more processors and that may be configured, constructed or implemented to communicate using any encoding process and techniques as defined or supported by any IEEE 801.11 standard such as 902.11n, 802.11AC, 802.11ax and 802.11be or other versions and embodiments of the IEEE 802.11 standard.

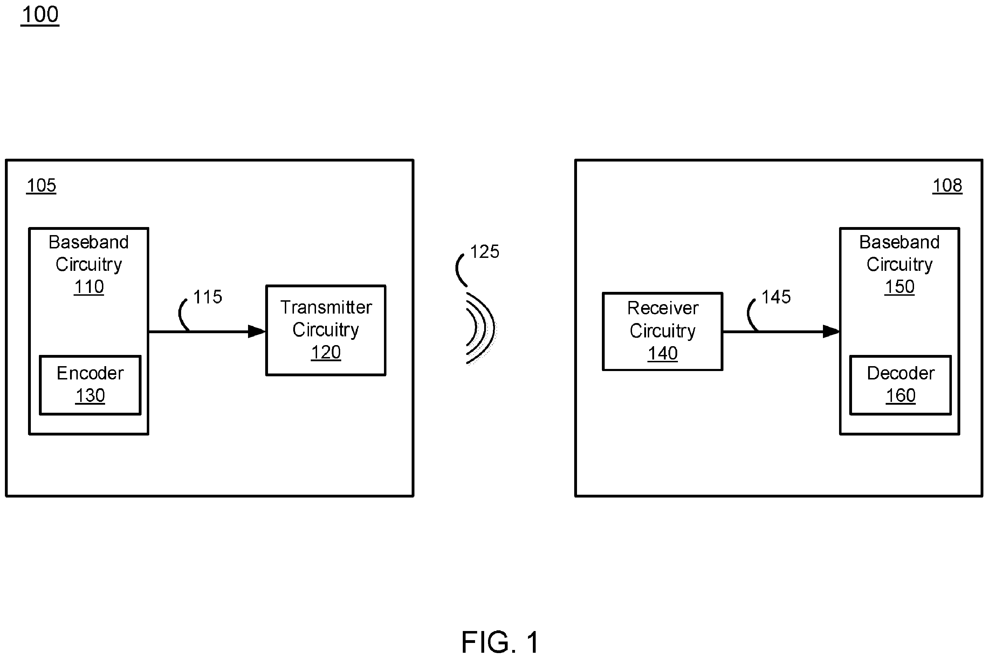

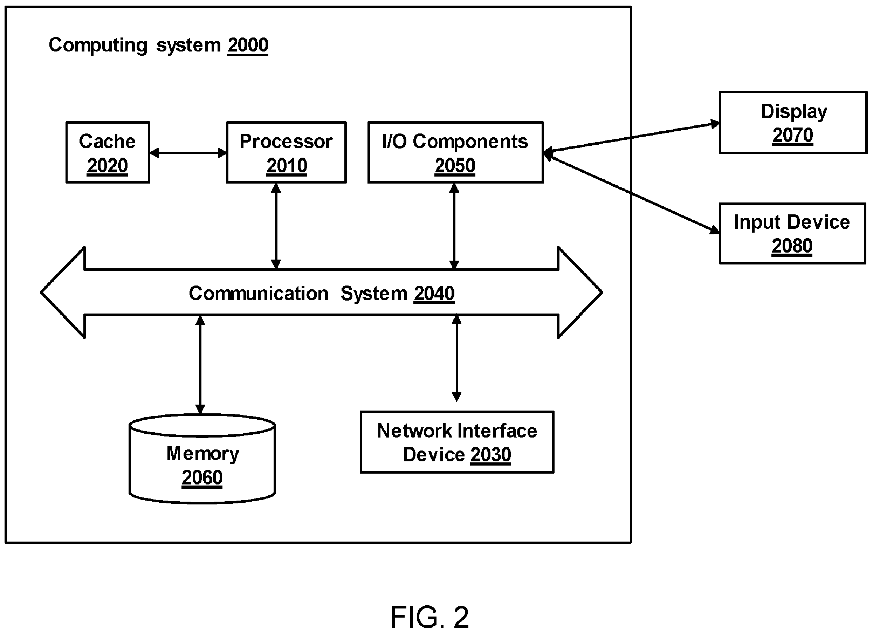

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 2000 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data, and generates or outputs parity bits. In one aspect, the baseband circuitry 110 (or encoder 130) obtains a generator matrix or a parity check matrix, or uses a previously produced generator matrix or a previously produced parity check matrix, and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix, and appends the parity bits to the information bits to form a codeword. The baseband circuitry 110 generates the baseband data 115 including the codeword for the communication system 108, and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system, according to an embodiment. An illustrated example computing system 2000 includes one or more processors 2010 in direct or indirect communication, via a communication system 2040 (e.g., bus), with memory 2060, at least one network interface controller 2030 with network interface port for connection to a network (not shown), and other components, e.g., input/output ("I/O") components 2050. Generally, the processor(s) 2010 will execute instructions (or computer programs) received from memory. The processor(s) 2010 illustrated incorporate, or are connected to, cache memory 2020. In some instances, instructions are read from memory 2060 into cache memory 2020 and executed by the processor(s) 2010 from cache memory 2020. The computing system 2000 may not necessarily contain all of these components shown in FIG. 2, and may contain other components that are not shown in FIG. 2.

In more detail, the processor(s) 2010 may be any logic circuitry that processes instructions, e.g., instructions fetched from the memory 2060 or cache 2020. In many implementations, the processor(s) 2010 are microprocessor units or special purpose processors. The computing device 2050 may be based on any processor, or set of processors, capable of operating as described herein. The processor(s) 2010 may be single core or multi-core processor(s). The processor(s) 2010 may be multiple distinct processors.

The memory 2060 may be any device suitable for storing computer readable data. The memory 2060 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 2000 may have any number of memory devices 2060.

The cache memory 2020 is generally a form of computer memory placed in close proximity to the processor(s) 2010 for fast read times. In some implementations, the cache memory 2020 is part of, or on the same chip as, the processor(s) 2010. In some implementations, there are multiple levels of cache 2020, e.g., L2 and L3 cache layers.

The network interface controller 2030 manages data exchanges via the network interface (sometimes referred to as network interface ports). The network interface controller 2030 handles the physical and data link layers of the OSI model for network communication. In some implementations, some of the network interface controller's tasks are handled by one or more of the processor(s) 2010. In some implementations, the network interface controller 2030 is part of a processor 2010. In some implementations, the computing system 2000 has multiple network interfaces controlled by a single controller 2030. In some implementations, the computing system 2000 has multiple network interface controllers 2030. In some implementations, each network interface is a connection point for a physical network link (e.g., a cat-5 Ethernet link). In some implementations, the network interface controller 2030 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 2030 implements one or more network protocols such as Ethernet. Generally, a computing device 2050 exchanges data with other computing devices via physical or wireless links through a network interface. The network interface may link directly to another device or to another device via an intermediary device, e.g., a network device such as a hub, a bridge, a switch, or a router, connecting the computing device 2000 to a data network such as the Internet.

The computing system 2000 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 2000 may include an interface (e.g., a universal serial bus (USB) interface) for connecting input devices, output devices, or additional memory devices (e.g., portable flash drive or external media drive). In some implementations, a computing device 2000 includes an additional device such as a co-processor, e.g., a math co-processor can assist the processor 2010 with high precision or complex calculations.

The components 2090 may be configured to connect with external media, a display 2070, an input device 2080 or any other components in the computing system 2000, or combinations thereof. The display 2070 may be a liquid crystal display (LCD), an organic light emitting diode (OLED) display, a flat panel display, a solid state display, a cathode ray tube (CRT) display, a projector, a printer or other now known or later developed display device for outputting determined information. The display 2070 may act as an interface for the user to see the functioning of the processor(s) 2010, or specifically as an interface with the software stored in the memory 2060.

The input device 2080 may be configured to allow a user to interact with any of the components of the computing system 2000. The input device 2080 may be a plurality pad, a keyboard, a cursor control device, such as a mouse, or a joystick. Also, the input device 2080 may be a remote control, touchscreen display (which may be a combination of the display 2070 and the input device 2080), or any other device operative to interact with the computing system 2000, such as any device operative to act as an interface between a user and the computing system 2000.

Aspects of the operating environments and components described above will become apparent in the context of the systems and methods disclosed herein.

### B. SYSTEMS AND METHODS FOR ULTRA HIGH RELIABILITY (UHR) ENHANCED LONG RANGE (ELR) PAYLOAD CONFIGURATIONS

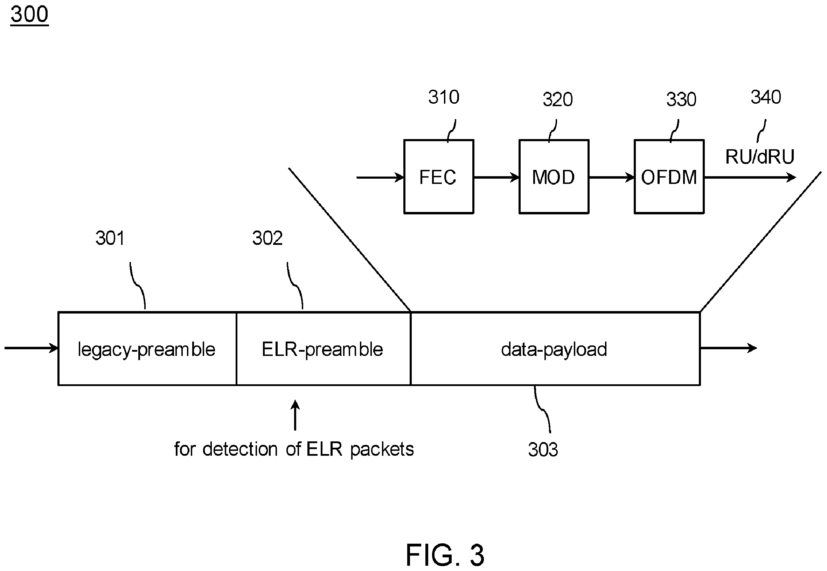

FIG. 3 is a diagram depicting a structure or format of an ELR packet 300, according to one or more implementations. The ELR packet 300 may be a physical layer protocol data unit (PPDU) including a legacy preamble 301, an ELR preamble 302, and a data payload 303. The legacy preamble 301 may be a WLAN-compatible (e.g., IEEE 802.11be-compatible) preamble. The ELR preamble 302 may be used for detection of ERL packets (e.g., by containing a particular sequence of bit values). The data payload may be encoded using a forward error correction (FEC) scheme 310, and modulated using a digital modulation scheme 320 and a channel modulation scheme such as OFDM 330. In some implementations, the FEC scheme may be implemented using low-density parity-check (LDPC) codes. RUs or dRUs can be defined/allocated/designed/configured for an OFDMA channel. The data payload may be transmitted using the defined/allocated/designed/configured RUs or dRUs 340.

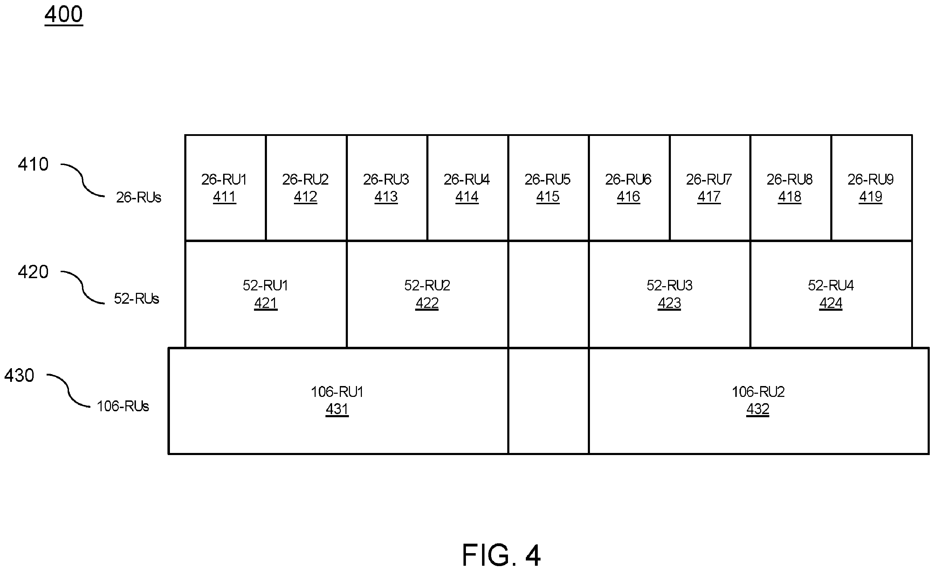

FIG. 4 is a diagram depicting an allocation structure 400 of resource units (RUs) in a bandwidth of 20 MHz, according to one or more implementations. A 20 MHz channel can be divided into multiple RUs, each including a number of subcarriers (or tones). For example, 256 tones of the 20 MHz chancel can be allocated/grouped into (1) RUs including 26 tones (referred to as "26-RUs" 410), (2) RUs including 52 tones (referred to as "52-RUs" 420), or (3) RUs including 106 tones (referred to as "106-RUs" 430). As shown in FIG. 4, the 26-RUs 410 may include nine 26-RUs including 26-RU1 411, 26-RU2 412, 26-RU3 413, 26-RU4 414, 26-RU5 415, 26-RU6 416, 26-RU7 417, 26-RU8 418, and 26-RU9 419. The 52-RUs 420 may include four 52-RUs including 52-RU1 421, 52-RU2 422, 52-RU3 423, and 52-RU4 424 such that (1) 52-RU1 421 includes tones allocated to 26-RU1 411 and 26-RU2 412; (2) 52-RU2 422 includes tones allocated to 26-RU3 413 and 26-RU4 414; (3) 52-RU3 423 includes tones allocated to 26-RU6 416 and 26-RU7 417; and (4) 52-RU4 424 includes tones allocated to 26-RU8 418 and 26-RU9 419. The 106-RUs 430 may include two 106-RUs including 106-RU1 431 and 106-RU2 432 such that (1) 106-RU1 431 includes tones allocated to 26-RU1 411 through 26-RU4 414; and (2) 106-RU2 432 includes tones allocated to 26-RU6 416 through 26-RU9 419.

In one aspect, in order to improve the efficiency of a communication system (e.g., efficiency of the design/definition/configuration of the payload structure, efficiency of data transmission using OFDM), a preamble can be designed/defined/configured to be robust enough to support 1Mbps. Support for more than 1Mbps would make the preamble overly long and complex. Hence, support for 1Mbps or a rate not much lower than 1Mbps may be limited by the preamble and may increase on-air time.

There is also a preference to utilize as much as possible existing designs/schemes/configurations from standards such as the IEEE 802.11ac, the IEEE 802.11ax or the IEEE 802.11be to minimize design effort. There are several designs/configurations that exist. For example, the design/scheme/configuration of MCS0 (Modulation Coding Scheme (MCS) index 0) over 26-RU can support rates 800-900Kbps depending on cyclic prefix (CP) size; however, the supported rates are a bit too low. The design/scheme/configuration of MCS0 over 52RU can support about 1.7Mbps (with CP=1.6µs); this scheme can use repetition in time to achieve a data rate less than 1Mbps but may have similar problem as with 26-RU. The design/scheme/configuration of MCS0 over 20 MHz channel in the IEEE 802.11ac can support a data rate of 6.25Mbps (with CP=0.8µs) and can use repetition to achieve up to a data rate of 1MBps. When the scheme of MCS0 over the IEEE 802.11ac 20 MHz is used, the data rate over the 3.2µs OFDM Symbol (plus 0.8µs CP) can be 6.25Mbps. If the same symbol is used to carry the data with 8 times repetition and prepended with a single 1.6µs CP, a data rate of 956 Kbps can be achieved which is fairly close to 1Mbps. A repetition of 7 times instead with the same 1.6µs CP can yield 1.083Mbps. However, simple time domain repetition can cause devices to falsely detect preamble on that symbol since Wi-Fi preamble acquisition is based on repetition.

To address these problems, in order to improve the efficiency of the design/definition/configuration of a payload structure and/or the efficiency of data transmission, systems and methods according to some implementations can utilize various techniques on one or more parameters including at least one of symbol periodicity, a size of RU, the number of tones, a code rate, or a CP size.

In some implementations, the systems and methods of the present disclosure improve the efficiency of the design/definition/configuration of the payload structure and/or the efficiency of data transmission in wireless networks (e.g., WLAN). Systems and methods according to some implementations can utilize various techniques on one or more parameters including at least one of symbol periodicity, a size of RU, the number of tones, a code rate, or a CP size, described herein. In order to improve the efficiency of the design/definition/configuration of the payload structure and/or the efficiency of data transmission, systems and methods according to some implementations provide several ways to determine/select/choose/adjust/vary one or more parameters including at least one of symbol periodicity, a size of RU, the number of tones, a code rate, or a CP size. For example, the systems and methods can provide several ways to arrive at the right number of tones and code rate to achieve a desired data rate (e.g., target data rate).

In some implementations, systems and methods can identify, based on a target data rate (e.g., 1Mbps) and/or a frequency bandwidth (e.g., 20MHz), a number of repetition N_{R} to achieve the target data rate. For example, a system can identify N_{R}=8 so that if repeating an OFDM symbol 8 times with a single CP=1.6µs prepended, the system can achieve a data rate (e.g., 956 Kbps) fairly close to 1Mbps. The system can identify N_{R}=7 so that if repeating a symbol 7 times with CP=1.6µs prepended, the system can achieve a data rate (e.g., 1.083Mbps) which is also fairly close to 1Mbps. In some implementations, the system can cyclically shift each repetition (e.g., each repeated symbol) by a different number of samples to prevent periodicity in the signal. If each repetition includes 64 samples, numbers spanning 0 to 63 can be used to cyclically shift each repetition. Here, samples (of a symbol) refer to individual points in the time-domain waveform of the symbol (e.g., OFDM symbol). For example, if a first symbol includes x0, x1, ..., x63 samples, and then a second symbol next to the first symbol can be cyclically shifted by three samples (e.g., 3 among 0 to 63 can be used as the number of cyclic shifts) so that the second symbol can include x3, x4, ..., x63, x0, x1, x2 samples. Generally, if a symbol that is repeated includes n samples, the number of cyclical shifts can span 0 to (n-1). In some implementations, a symbol including 64 samples can be used to align with a symbol size used in wireless standard (e.g., 802.11ac).

In some implementations, systems and methods can utilize/leverage the scheme/design/configuration of dRU (distributed RU or interleaved RU) in the IEEE 802.11bn with minor changes. dRU can spread tones over the 20MHz to maximize transmit power in certain regulatory domains. In a 52-RU (or 52-dRU) design/configuration, there may be 4 different possible mappings. One mapping can be used in one symbol and another mapping used in the next symbol, thereby avoiding repetition and providing better diversity by using different tones in different symbols. However, in order to reach 1Mbps, systems and methods can add 4 data tones so as to reuse the 56 RU design/configuration from the IEEE 802.11ac. The 4 data tones may be chosen arbitrarily from unused data tones. For example, the design/configuration of 106-RU can be based on adding 4 tones to the designs/configurations of the 52-RU and those same tones could be used. It is noted that this design/configuration in the second embodiment is independent of any specific RU design/configuration provided that it contains designs/configurations for RU52 which is the goal of the IEEE 802.11bn.

In some implementations, systems and methods can use a new code rate, for example, a binary phase-shift keying (BPSK) with a code rate of 2/3 instead of using a BPSK with a code rate of ½ (MCS0). In some implementations, a code rate of 2/3 can be used with quadrature phase shift keying (QPSK) and higher quadrature amplitude modulation (QAM), thereby providing a simple extension.

In some implementations, when combining a 26-RU with BPSK and a code rate 2/3, the systems and methods can achieve a data rate of 1.11Mbps. Using a slightly lower code rate of 5/8 can achieve a data rate of 1.04Mbps which is closer to 1Mbps (which is a design/configuration goal) but may require a new code rate. The new code rate can be designed/configured by puncturing an existing code rate (e.g., discarding or removing one or more parity bits from the parity bits after encoding).

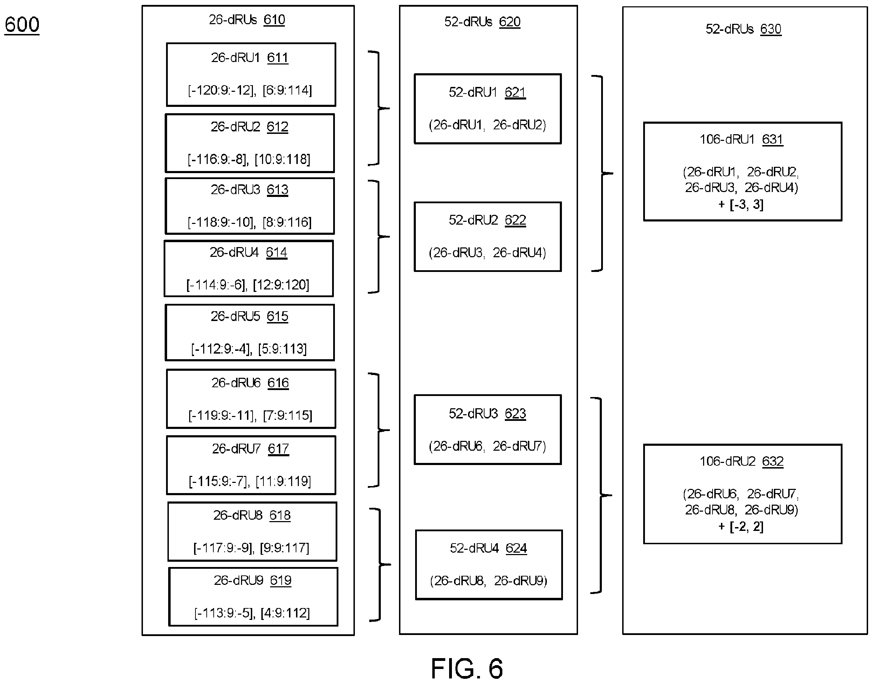

In some implementations, improved performance may be achieved by using QPSK with a code rate of 1/3 or similar code rates. In some embodiments, systems and methods can use 26-RU (as shown in FIG. 6) in order to spread the tones across the entire 20MHz for improved power and diversity. Different RU (e.g., out of the 9 26--RUs defined) may be used in successive symbols so as to use different tone sets.

In some implementations, an OFDM modulation scheme with 52-dRUs may be combined with BPSK and a code rate 1/3, the systems and methods can achieve a data rate close to 1Mbps. The code rate 1/3 may be a code rate of an LDPC code.

In some implementations, systems and methods can use a new RU size. For example, the systems and methods can use/define/configure a bigger RU size instead of using 26-RU. The 26-RU may have 24 data tones and 2 pilots, such that 12 information bits are transmitted per BPSK symbol. In some implementations, the systems and methods can use 15 information bits instead of 12 information bits, thereby achieving a data rate of 1.04Mbps with 1.6 µs CP and 30 data tones.

In some implementations, a system for wireless communications over one or more channels, may include one or more processors and memory coupled with the one or more processors. The one or more processors may be configured to identify, based at least on a target data rate and a frequency bandwidth of a channel among the one or more channels, (1) a number of resource units (RUs) within the frequency bandwidth and (2) a number of tones per RU to achieve the target data rate. The one or more processors may be configured to transmit, via a transmitter, data using one or more RUs. The target data rate may be 1 Mbps. The frequency bandwidth may be 20MHz. Each of the one or more RUs may be a distributed RU (dRU).

In some implementations, the one or more processors may be configured to transmit a first symbol and a second symbol subsequent to the first symbol using a plurality of RUs. An RU for transmitting the first symbol and an RU for transmitting the second symbol may be different among the plurality of RUs.

In some implementations, the one or more processors may be configured to identify, based at least on the target data rate and the frequency bandwidth of the channel, a number of repetitions per OFDM symbol while applying a single CP to the repeated symbols. For a particular symbol, the one or more processors may be configured to generate a plurality of symbols according to the number of repetitions by cyclically shifting the particular symbol. The one or more processors may be configured to transmit, via the transmitter, the generated plurality of symbols.

In some implementations, the one or more processors may be configured to identify, based at least on the target data rate and the frequency bandwidth of the channel, a number of additional tones within the frequency bandwidth to achieve the target data rate. The number of RUs within the frequency bandwidth may be 2. The number of tones per RU may be 106. The number of additional tones within the frequency bandwidth may be 4.

In some implementations, the one or more processors may be configured to identify, based at least on the target data rate, a modulation scheme and a coding rate. The one or more processors may be configured to modulate, using the modulation scheme and the coding rate. The number of RUs within the frequency bandwidth may be 4. The number of tones per RU may be 52. The modulation scheme may be binary phase-shift keying (BPSK). The coding rate may be 1/3.

In some implementations, the number of RUs within the frequency bandwidth may be 9. The number of tones per RU may be 26. The modulation scheme may be binary phase-shift keying (BPSK). The coding rate may be 2/3.

Embodiments in the present disclosure have at least the following advantages and benefits. First, embodiments in the present disclosure can provide useful techniques for preventing periodicity of symbols in a signal by cyclically shifting each repetition. Second, embodiments in the present disclosure can provide useful techniques for maximizing transmit power in certain regulatory domains using distributed RU (dRU). Third, embodiments in the present disclosure can provide useful techniques for improving power and diversity using a new code rate, e.g., a code rate of 2/3. Fourth, embodiments in the present disclosure can provide useful techniques for achieving a rate of approximately 1Mbps (e.g., 1.04 Mbps) by increasing the RU size.

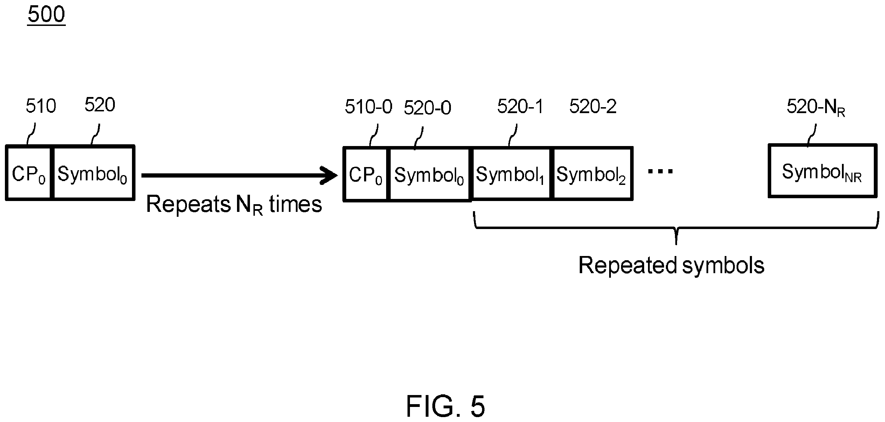

FIG. 5 is a diagram 500 depicting an example of repeating symbols to achieve a target data rate (e.g., close to 1 Mbps), according to one or more embodiments. Systems and methods (e.g., communication system 105, baseband circuitry 110, or transmitter circuitry 120) can identify, based on a target data rate (e.g., 1Mbps) and/or a frequency bandwidth (e.g., 20MHz), a number of repetition N_{R} to achieve the target data rate. For example, a system can identify N_{R}=8 so that if repeating an OFDM symbol 8 times with a single CP=1.6µs prepended, the system can achieve a data rate (e.g., 956 Kbps) fairly close to 1Mbps. The system can identify N_{R}=7 so that if repeating an OFDM symbol 7 times with a single CP=1.6µs prepended, the system can achieve a data rate (e.g., 1.083Mbps) which is also fairly close to 1Mbps. Referring to FIG. 5, in response to identifying N_{R} and a pair of CP₀ (510) and Symbol₀ (520), the system repeat Symbol₀ N_{R} times, resulting in a sequence of CP₀ (510-1), Symbol₀ (520-0), Symbol₁ (520-1), Symbol₂ (520-2), ..., and Symbol_{NR} (520- N_{R}).

The system can cyclically shift each repetition (e.g., each repeated symbol Symbol₁, Symbol₂, ..., and Symbol_{NR} in FIG. 5) by a different number of samples to prevent periodicity in the signal. For example, if each repetition includes 64 samples, numbers spanning 0 to 63 can be used to cyclically shift each repetition. If a first OFDM symbol includes x0, x1, ..., x63 samples, and then a second symbol next to the first symbol can be cyclically shifted by three samples (e.g., 3 among 0 to 63 can be used as the number of cyclic shifts) so that the second symbol can include x3, x4, ..., x63, x0, x1, x2 samples.

FIG. 6 is a diagram 600 depicting an example structure of distributed resource units (dRUs) in a bandwidth of 20 MHz to achieve up to a target data rate (e.g., close to 1Mbps), according to one or more embodiments. FIG. 6 also shows data and pilot subcarrier indices for each dRU in a 20 MHz EHT PPDU. In some implementations, systems and methods can utilize/leverage the scheme/design/configuration of dRU (distributed RU or interleaved RU) in the IEEE 802.11bn with minor changes. dRU can spread tones over the 20MHz to maximize transmit power in certain regulatory domains.

As shown in FIG. 6, 256 tones of the 20 MHz chancel can be allocated/grouped into (1) dRUs including 26 tones (referred to as "26-dRUs" 610), (2) dRUs including 52 tones (referred to as "52-dRUs" 620), or (3) dRUs including 106 tones (referred to as "106-dRUs" 630). The 26-dRUs 610 may include nine 26-dRUs (data and pilot subcarrier indices in parentheses) including 26-dRU1 611 (-120:9:-12, 16:9:114), 26-dRU2 612 (-120:9:-12, 16:9:114), 26-dRU3 613 (-120:9:-12, 16:9:114), 26-dRU4 614 (-120:9:-12, 16:9:114), 26-dRU5 615 (-120:9:-12, 16:9:114), 26-dRU6 616 (-120:9:-12, 16:9:114), 26-dRU7 617 (-120:9:-12, 16:9:114), 26-dRU8 618 (-120:9:-12, 16:9:114), and 26-dRU9 619 (-120:9:-12, 16:9:114). The expression "Nᵢ:N_{w}:N_{f}" refers to a range of one or more subcarrier indices Nᵢ , Nᵢ+N_{w}, Nᵢ+2N_{w}, ..., N_{f}. The expression "[Nₐ, N_{b}]" refers to Nₐ and N_{b}. The 52-dRUs 620 may include four 52-dRUs including 52-dRU1 621, 52-dRU2 622, 52-dRU3 623, and 52-dRU4 624 such that (1) 52-dRU1 621 includes tones allocated to 26-dRU1 611 and 26-dRU2 612; (2) 52-dRU2 622 includes tones allocated to 26-dRU3 613 and 26-dRU4 614; (3) 52-dRU3 623 includes tones allocated to 26-dRU6 616 and 26-dRU7 617; and (4) 52-dRU4 624 includes tones allocated to 26-dRU8 618 and 26-dRU9 619. The 106-RUs 630 may include two 106-dRUs including 106-dRU1 631 and 106-dRU2 632 such that (1) 106-dRU1 631 includes tones allocated to 26-dRU1 611 through 26-dRU4 614 and [-3, 3]; and (2) 106-RU2 432 includes tones allocated to 26-RU6 416 through 26-RU9 419 and [-2, 2].

In a 52-RU (or 52-dRU) design/configuration, there may be 4 different possible mappings (e.g., 52-dRU1 621, 52-dRU2 622, 52-dRU3 623, 52-dRU4 624 in FIG. 6). One mapping can be used in one symbol and another mapping used in the next symbol, thereby avoiding repetition and providing better diversity by using different tones in different symbols. However, in order to reach 1Mbps, systems and methods can add 4 data tones so as to reuse the 56 encoding design/configuration from the IEEE 802.11ac. The 4 data tones may be chosen arbitrarily from unused data tones. For example, the design/configuration of 106-dRU can be based on adding 4 tones to the designs/configurations of the 52-dRU and those same tones could be used. For example, as shown in FIG. 6, the 4 tones [-3, 3] and [-2, 2] are added to form the 106-RUs 630 such that (1) tones [-3, 3] are added to 26-dRU1 611 through 26-dRU4 614 to form 106-dRU1 631; and tones [-2, 2] are added to 26-dRU6 616 through 26-dRU9 619 to form 106-dRU2 632.

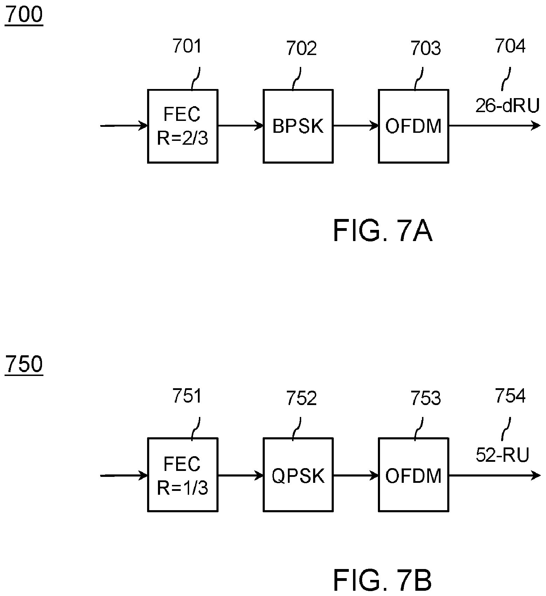

FIG. 7A and FIG. 7B are diagrams depicting an example of configuring a code rate, a modulation scheme and a dRU structure to achieve a target data rate (e.g., close to 1Mbps), according to one or more embodiments. In some implementations, systems and methods can use a new code rate, for example, a BPSK scheme with a code rate of 2/3 instead of using a BPSK scheme with a code rate of ½ (MCS0). In some implementations, a code rate of 2/3 can be used with QPSK and higher QAM, thereby providing a simple extension.

FIG. 7A shows a scheme 700 in which an OFDM modulation scheme (703) with 26-dRUs (704) are combined with BPSK 702 and a code rate 2/3 (701), the systems and methods can achieve a data rate of 1.11Mbps. Using a slightly lower code rate of 5/8 can achieve a data rate of 1.04Mbps which is closer to 1Mbps (which is a design/configuration goal) but may require a new code rate. The new code rate can be designed/configured by puncturing an existing code rate (e.g., discarding or removing one or more parity bits from the parity bits after encoding). In some embodiments, improved performance may be achieved by using QPSK with a code rate of 1/3 or similar code rates. In some embodiments, systems and methods can use 26-dRU (as shown in FIG. 6) in order to spread the tones across the entire 20MHz for improved power and diversity. Different dRU (e.g., out of the 9 26-dRUs defined) may be used in successive symbols so as to use different tone sets.

FIG. 7B shows a scheme 750 in which an OFDM modulation scheme (753) with 52-RUs (754) are combined with BPSK (752) and a code rate 1/3 (751), the systems and methods can achieve a data rate close to 1Mbps. The code rate 1/3 may be a code rate of an LDPC code.

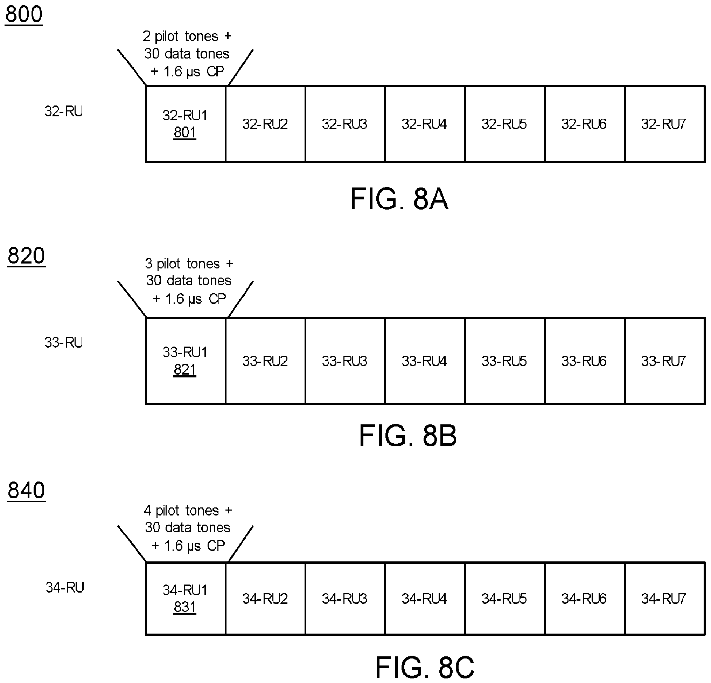

FIG. 8A, FIG. 8B and FIG. 8C are diagrams depicting an example structure of RUs in a bandwidth of 20 MHz to achieve a target data rate, according to one or more embodiments. FIG. 8A, FIG. 8B and FIG. 8C show configurations using RUs with 30 tones (referred to as "30-RU") instead of using 26-RU. As shown in FIG. 8A, a 32-RU configuration 800 may have 30 data tones and 2 pilots in a 32-RU (e.g., 32-RU1 801), such that 15 information bits are transmitted per BPSK symbol, thereby achieving a data rate of 1.04Mbps with 1.6 µs CP and 30 data tones. As shown in FIG. 8B, a 33-RU configuration 820 may have 30 data tones and 3 pilots in a 33-RU (e.g., 33-RU1 821), such that 15 information bits are transmitted per BPSK symbol, thereby achieving a data rate of 1.04Mbps with 1.6 µs CP and 30 data tones. As shown in FIG. 8C, a 34-RU configuration 840 may have 30 data tones and 4 pilots in a 34-RU (e.g., 34-RU1 841), such that 15 information bits are transmitted per BPSK symbol, thereby achieving a data rate of 1.04Mbps with 1.6 µs CP and 30 data tones.

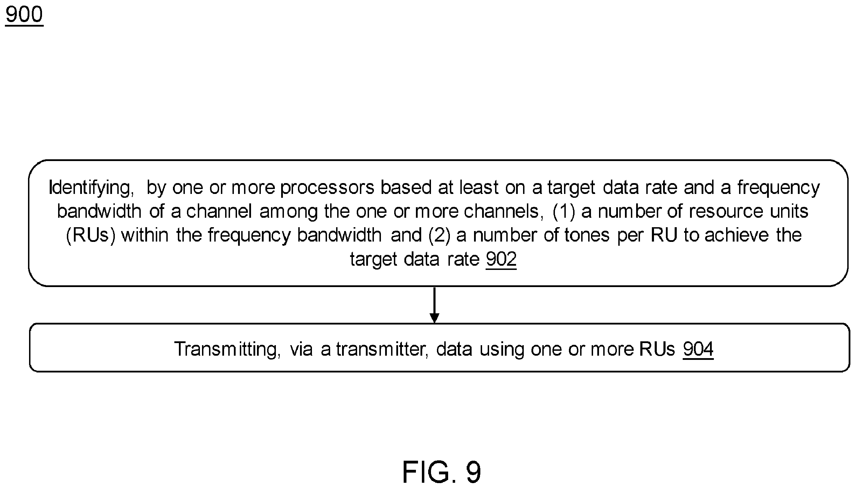

FIG. 9 is a flow diagram showing a process 900 for configuring a payload structure to achieve a target data rate, according to one or more embodiments. In some embodiments, the process 900 for wireless communications over one or more channels is performed by one or more processors of a system (e.g. processor 2010 of communication system 105, transmitter circuitry 120, baseband circuitry 110). In other embodiments, the process 900 is performed by other entities (e.g., a computing system other than the communication system 105). In some embodiments, the process 900 includes more, fewer, or different steps than shown in FIG. 9.

At step 902, the one or more processors (e.g., communication system 105) may identify, based at least on a target data rate (e.g., 1Mbps) and a frequency bandwidth (e.g., 20MHz) of a channel among the one or more channels, (1) a number of resource units (RUs) within the frequency bandwidth and (2) a number of tones per RU to achieve the target data rate. The number of RUs within the frequency bandwidth may be 4. The number of tones per RU may be 52. For example, the communication system 105 may identify 52-dRUs 620 including four 52-dRUs (52-dRU1, 52-dRU2, 52-dRU3, 52-dRU4) each including 52 tones. In some implementations, the target data rate may be 1Mbps. The frequency bandwidth may be 20MHz.

In some implementations, the one or more processors may identify, based at least on the target data rate, a modulation scheme and a coding rate. The modulation scheme may be BPSK. The coding rate may be 1/3. See the configuration shown in FIG. 7B.

In some implementations, the one or more processors may identify, based at least on the target data rate and the frequency bandwidth of the channel, a number of additional tones within the frequency bandwidth to achieve the target data rate. The number of RUs within the frequency bandwidth may be 2. The number of tones per RU may be 106. The number of additional tones within the frequency bandwidth may be 4. For example, the communication system 105 may identify 106-dRUs 630 including two 106-dRUs (106-dRU1, 106-dRU2). Each of the two 106-dRUs may include 104 tones and two additional tones. See the configuration shown in FIG. 6.

In some implementations, the number of RUs within the frequency bandwidth may be 9. The number of tones per RU may be 26. The modulation scheme may be BPSK. The coding rate may be 2/3. See the configuration shown in FIG. 7A.

At step 904, the one or more processors may transmit, via a transmitter (e.g., transmitter circuitry 120), data using one or more RUs. Each of the one or more RUs may be a distributed RU (dRU). For example, the dRU is a 26-dRU.

In some implementations, the one or more processors may be configured to transmit a first symbol and a second symbol subsequent to the first symbol using a plurality of RUs. An RU for transmitting the first symbol and an RU for transmitting the second symbol may be different among the plurality of RUs. For example, the RU for transmitting the first symbol is 26-dRU1 and the RU for transmitting the second symbol is 26-dRU2 as shown in FIG. 6.

In some implementations, the one or more processors may be configured to identify, based at least on the target data rate and the frequency bandwidth of the channel, a number of repetitions per OFDM symbol (e.g., n repetitions as shown in FIG. 5) while applying a single CP to the repeated symbols. For a particular symbol (e.g., Symbol₀ in FIG. 5), the one or more processors may be configured to generate a plurality of symbols (e.g., Symbol₀ (520-0), Symbol₁ (520-1), Symbol₂ (520-2), ..., Symbol_{NR} (520-N_{R}) in FIG. 5) according to the number of repetitions by cyclically shifting the particular symbol. For example, if a first OFDM symbol includes x0, x1, ..., x63 samples, and then a second symbol next to the first symbol can be cyclically shifted by three samples (e.g., 3 among 0 to 63 can be used as the number of cyclic shifts) so that the second symbol can include x3, x4, ..., x63, x0, x1, x2 samples. The one or more processors may be configured to transmit, via the transmitter, the generated plurality of symbols.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system (2000) for wireless communications over one or more channels, comprising:
one or more processors (2010); and
memory (2060) coupled with the one or more processors (2010),
wherein the one or more processors (2010) are configured to:
identify, based at least on a target data rate and a frequency bandwidth of a channel among the one or more channels, (1) a number of resource units, Rus, within the frequency bandwidth and (2) a number of tones per RU to achieve the target data rate; and
transmit, via a transmitter (120), data using one or more RUs.

2. The system (2000) according to claim 1, wherein
the target data rate is 1Mbps, and
the frequency bandwidth is 20MHz.

3. The system (2000) according to claim 1 or 2, wherein
each of the one or more RUs is a distributed RU, dRU.

4. The system (2000) according to any of claims 1 to 3, wherein
the one or more processors (2010) are configured to transmit a first symbol and a second symbol subsequent to the first symbol using a plurality of RUs, and
an RU for transmitting the first symbol and an RU for transmitting the second symbol are different among the plurality of RUs.

5. The system (2000) according to any of claims 1 to 4, wherein the one or more processors (2010) are further configured to:
identify, based at least on the target data rate and the frequency bandwidth of the channel, a number of repetitions per symbol;
for a particular symbol, generate a plurality of symbols according to the number of repetitions by cyclically shifting the particular symbol; and
transmit, via the transmitter (120), the generated plurality of symbols.

6. The system (2000) according to any of claims 1 to 5, wherein the one or more processors (2010) are further configured to:
identify, based at least on the target data rate and the frequency bandwidth of the channel, a number of additional tones within the frequency bandwidth to achieve the target data rate.

7. The system (2000) according to claim 6, wherein
the number of RUs within the frequency bandwidth is 2,
the number of tones per RU is 106, and
the number of additional tones within the frequency bandwidth is 4.

8. The system (2000) according to any of claims 1 to 7, wherein the one or more processors (2010) are further configured to:
identify, based at least on the target data rate, a modulation scheme and a coding rate; and
modulate, using the modulation scheme and the coding rate, the first data and the second data.

9. The system (2000) according to claim 8, wherein
the number of RUs within the frequency bandwidth is 4,
the number of tones per RU is 52,
the modulation scheme is binary phase-shift keying, BPSK, and
the coding rate is 1/3.

10. The system (2000) according to claim 8 or 9, wherein
the number of RUs within the frequency bandwidth is 9,
the number of tones per RU is 26,
the modulation scheme is binary phase-shift keying, BPSK, and
the coding rate is 2/3.

11. A method for wireless communications over one or more channels, comprising:
identifying, by one or more processors (2010) based at least on a target data rate and a frequency bandwidth of a channel among the one or more channels, (1) a number of resource units, Rus, within the frequency bandwidth and (2) a number of tones per RU to achieve the target data rate; and
transmitting, via a transmitter (120), data using one or more RUs.

12. The method according to claim 11, comprising at least one of the following features:
i) wherein
the target data rate is 1Mbps, and
the frequency bandwidth is 20MHz;
ii) wherein
each of the one or more RUs is a distributed RU, dRU;
iii) further comprising:
transmitting a first symbol and a second symbol subsequent to the first symbol using a plurality of RUs,
wherein an RU for transmitting the first symbol and an RU for transmitting the second symbol are different among the plurality of Rus;
iv) further comprising:
identifying, based at least on the target data rate and the frequency bandwidth of the channel, a number of repetitions per symbol;
for a particular symbol, generating a plurality of symbols according to the number of repetitions by cyclically shifting the particular symbol; and
transmitting, via the transmitter (120), the generated plurality of symbols.

13. The method according to claim 11 or 12, further comprising:
identifying, based at least on the target data rate and the frequency bandwidth of the channel, a number of additional tones within the frequency bandwidth to achieve the target data rate;
in particular wherein
the number of RUs within the frequency bandwidth is 2,
the number of tones per RU is 106, and
the number of additional tones within the frequency bandwidth is 4.

14. The method according to any of claims 11 to 13, further comprising:
identifying, based at least on the target data rate, a modulation scheme and a coding rate; and
modulating, using the modulation scheme and the coding rate, the first data and the second data.

15. The method according to claim 14, comprising at least one of the following features:
i) wherein
the number of RUs within the frequency bandwidth is 4,
the number of tones per RU is 52,
the modulation scheme is binary phase-shift keying, BPSK, and
the coding rate is 1/3;
ii) wherein
the number of RUs within the frequency bandwidth is 9,
the number of tones per RU is 26,
the modulation scheme is binary phase-shift keying, BPSK, and
the coding rate is 2/3.
